# EUROPÄISCHE PATENTSCHRIFT

(11) **EP 3 018 308 B1**
(45) Veröffentlichungstag und Bekanntmachung des Hinweises auf die Patenterteilung: **04.09.2019**
(21) Anmeldenummer: 15002449.5
(22) Anmeldetag: 24.04.2013
(51) Int. Cl.: F01N 3/00, F01N 11/00, F01N 13/16, G01K 7/36, G01K 11/12, G01N 27/00, G01N 27/82, G01R 33/00

(54) **ABGASNACHBEHANDLUNGSSYSTEM FÜR BRENNKRAFTMASCHINEN**
WASTE GAS TREATMENT SYSTEM FOR COMBUSTION ENGINES
SYSTEME DE TRAITEMENT DES GAZ D'ECHAPPEMENT POUR DES MOTEURS A COMBUSTION INTERNE

(30) Priorität: 04.07.2012 DE 102012013221
(43) Veröffentlichungstag der Anmeldung: 11.05.2016
(62) Teilanmeldung aus: 13002150.4
(73) Patentinhaber: MAN Truck & Bus SE, 80995 München (DE)
(72) Erfinder: Döring, Andreas, 82008 München (DE); Rothe, Dieter, 90403 Nürnberg (DE)
(74) Vertreter: Liebl, Thomas

(56) Entgegenhaltungen:
- DE-A1-102009 027 862
- FR-A1- 2 966 198
- US-A1- 2009 097 528
- US-B1- 6 974 249

## Beschreibung

Die Erfindung betrifft ein Abgasnachbehandlungssystem mit einem Katalysator und/oder mit einer anderen Abgasnachbehandlungseinheit für den Einsatz im Abgasstrom von Brennkraftmaschinen.

Zur Reduzierung der Emissionen von Brennkraftmaschinen, insbesondere von Verbrennungsmotoren in Kraftfahrzeugen, werden Abgasnachbehandlungssysteme eingesetzt, die Partikelfilter und/oder Katalysatoren als Abgasnachbehandlungseinheiten verwenden. Diese Abgasnachbehandlungseinheiten haben einen temperaturabhängigen Wirkungsgrad und können bei zu hohen Betriebstemperaturen auch irreversibel beschädigt oder auch vollständig unbrauchbar werden.

Bei einem Partikelfilter kann beispielsweise eine Rußoxidation optimal bei ca. 370° C ablaufen. Liegen dagegen die Betriebstemperaturen unterhalb von 230° C kann keine sichere Funktion des Partikelfilters sichergestellt werden. Dies kann bei schwach belasteten und in Fahrzeugen verbauten Motoren, beispielsweise bei Personenkraftwagen, Linienbussen oder Müllfahrzeugen, die noch zusätzliche hohe Leerlaufanteile aufweisen, auftreten. Durch die Zugabe von Kohlenwasserstoffen kann hier eine gezielte Temperaturerhöhung vorgenommen werden, um in einen optimalen Betriebstemperaturbereich zu gelangen.

Grundsätzlich besteht beim Betrieb der Abgasnachbehandlungseinheiten die Gefahr, dass beispielsweise durch exothermes Abbrennen des kohlenstoffhaltigen Rußes ein Temperaturanstieg bis auf 1000° C und damit eine Schädigung der Abgasnachbehandlungseinheit beziehungsweise nachgeschalteter Katalysatoren kommen kann. Auch der Einsatz von V₂O₅ als Aktivmaterial für einen SCR-Katalysator kann Probleme aufwerfen, wenn die Abgastemperatur am SCR-Katalysator über 650° C liegt, da V₂O₅ dann sublimiert. Bei derartigen Partikelfiltern mit V₂O₃ als Aktivmaterial können unkontrollierte Temperaturspitzen auftreten und den Partikelfilter schädigen.

Prinzipiell kann festgehalten werden, dass, insbesondere bei einer katalytischen Beschichtung des Partikelfilters darauf geachtet werden muss, dass bestimmte maximale Temperaturen nicht überschritten werden.

Neben Kohlenstoff sammelt sich auch Asche an, die bei der Verbrennung von Motoröl und/oder Kraftstoff, hier speziell sogenannter Biokraftstoffe, im Partikelfilter anfällt. Daher muss dieser turnusmäßig aus dem Fahrzeug ausgebaut und gereinigt werden. Dies läuft üblicherweise so ab, dass nach dem Ausbau der Filter in einem Ofen ausgebrannt wird, um eventuell noch enthaltenen Russ zu entfernen. Anschließend wird die Asche mir Hilfe von Druckluft ausgeblasen oder mit Hilfe von Wasser ausgewaschen.

Da die Reinigung sehr zeitintensiv ist und erhebliche Investitionen in die Reinigungseinrichtungen voraussetzt, werden die Filter oft nicht sofort gereinigt, sondern gegen einen zweiten Filter getauscht. Die ausgebauten Filter werden meist zentral gesammelt, gereinigt und als Tauschfilter dem Kreislauf wieder zur Verfügung gestellt.

Allerdings besteht dabei das Problem, dass bevor der Filter wieder in den Kreislauf eingeschleust werden kann, eine aufwändige Analyse des Filters, speziell auf zu hohe Betriebstemperaturen, die zu einer Beschädigung des Filters und/oder darauf aufgebrachter katalytischer Beschichtungen geführt haben können, erfolgen muss. Um Risse innerhalb des Filters, die durch zu hohe Temperaturspannungen entstanden sind, erkennen zu können, wird zum Beispiel Röntgen oder Computertomographie angewendet. Um zu überprüfen, ob die katalytische Beschichtung beschädigt ist, sind aufwändige Messungen, insbesondere Aktivitätsmessungen mit Hilfe von Modellgasanlagen, notwendig.

Aus der EP 1 560 009A1 ist ein Temperaturindikator für die Anwendung im Lebensmittelbereich bekannt, der insbesondere zur Überwachung der "Kühlkette" dient.

Die weitere US 2009/097528 A1 offenbart eine Vorrichtung zur Erfassung von Temperaturüberschreitungen in einer Abgasnachbehandlungseinheit, bei der ein temperaturempfindliches Element an einem hinsichtlich auftretender Temperaturen zu überwachenden Bereich der Abgasnachbehandlungseinheit angeordnet ist. Dieses temperaturempfindliche Element weist ein temperaturempfindliches Material auf, das bei einer vorgegebenen Grenztemperatur schmilzt. Zudem ist hier eine Überwachungseinheit vorgesehen, die das Schmelzen des temperaturempfindlichen Elements erfasst.

Aus der US 6 974 249 B1 ist eine Sensorik zur Abschätzung der verbleibenden nützlichen Lebensdauer einer Komponente, die einer Temperatur von über 400 Kelvin ausgesetzt ist, vorbekannt, bei der eine Vielzahl von Glaskeramik-Substraten in der Umgebung der Komponente positioniert sind. Diese Substrate weisen unterschiedliche Zusammensetzungen auf, wobei die Substrate auf bestimmte Temperatureinwirkungen mit unterschiedlichen Änderungen Ihrer Opazität reagieren.

Es ist Aufgabe der Erfindung, ein Abgasnachbehandlungssystem anzugeben, das eine einfache Möglichkeit bietet, Beschädigungen durch aufgetretene zu hohe Betriebstemperaturen an einem Partikelfilter oder Katalysator erkennen zu können.

Gelöst wird die Aufgabe durch ein Abgasnachbehandlungssystem mit den Merkmalen des Patentanspruches 1. Besonders vorteilhafte Weiterbildungen des Abgasnachbehandlungssystems sind in den Unteransprüchen offenbart.

Gemäß Patentanspruch 1 wird ein Abgasnachbehandlungssystem mit einem Katalysator und/oder mit einer anderen Abgasnachbehandlungseinheit für den Einsatz im Abgasstrom von Brennkraftmaschinen vorgeschlagen, wobei wenigstens ein temperaturempfindliches Element, welches wenigstens teilweise aus temperaturempfindlichem Material besteht, an wenigstens einem hinsichtlich auftretender Temperaturen zu überwachenden Bereich der Abgasnachbehandlungseinheit angebracht ist, und wobei das temperaturempfindliche Material bei wenigstens einer vorgegebenen Grenztemperatur seine Eigenschaft dauerhaft sichtbar ändert. Das temperaturempfindliche Material kann beispielsweise temperaturabhängig farbveränderlich sein oder beispielsweise bei bestimmten Temperaturen verdampfen. Wesentlich ist dabei, dass die detektierbaren Änderungen am temperaturempfindlichen Material dauerhaft sind, damit zu einem beliebigen späteren Zeitpunkt geprüft werden kann, ob eine oder gegebenenfalls auch mehrere vorgegebene Temperaturgrenzen überschritten wurden. Das jeweilige temperaturempfindliche Element kann aus mehreren Materialkomponenten bestehen, so dass beispielsweise eine Materialkomponente einen niedrigeren Temperaturgrenzwert und die andere Materialkomponente einen höheren Temperaturgrenzwert durch eine Materialveränderung anzeigen kann.

Erfindungsgemäß ist das temperaturempfindliche Element als separates Bauteil ausgeführt, das zwischen einem Substrat und einem Mantel eines Katalysators angeordnet ist.

Es besteht die Möglichkeit, das temperaturempfindliche Material auf ein mit dem Substrat vorzugsweise unlösbar verbundenes Bauteil aufzubringen. Die unlösbare Anbringung des Materials ist deshalb bevorzugt, weil dadurch sichergestellt werden kann, dass keine unerlaubten nachträglichen Manipulationen vorgenommen werden können.

Erfindungsgemäß wird das temperaturempfindliche Material zur Darstellung eines Barcodes oder eines 2D-Codes verwendet, der in einem zu überwachenden Bereich einer Abgasnachbehandlungseinheit angebracht ist. Der Code ist erfindungsgemäß so ausgebildet, dass die darin enthaltene Information beziehungsweise Codierung sich temperaturabhängig ändert, vorzugsweise beim Überschreiten von vorgegebenen Grenztemperaturen. Das hierfür verwendete temperaturempfindliche Material kann beim Überschreiten bestimmter Grenztemperaturen seine Farbe oder seine sonstige Beschaffenheit ändern, so dass dies zu einer entsprechenden Änderung des dargestellten Codes führt.

Zu diesem Zweck können unterschiedliche Thermofarben verwendet werden. Die verwendeten Farbpigmente können zum Beispiel Chromoxid (Cr₂O₃) oder Eisenoxid, etc. enthalten.

Selbstverständlich können bei allen oben beschriebenen Varianten auch mehrere, insbesondere unterschiedliche, temperaturempfindliche Elemente, die die Informationen über die Temperaturhistorie enthalten beziehungsweise anzeigen, auf dem Partikelfilter und/oder auf Bauteilen, die nicht zerstörungsfrei von diesem getrennt werden können, angebracht werden.

Zum einen bietet sich durch die Verwendung unterschiedlicher Elemente die Möglichkeit, diese so auszulegen, dass unterschiedliche Temperaturen erkannt werden können.

So sind beispielsweise auch andere Komponenten zur Abgasnachbehandlung auf diese Weise auf zu hohe Temperaturen überwachbar. Dazu zählen unter anderem Katalysatoren zur Oxidation von NO, NOx-Speicherkatalysatoren, speziell wenn sie mit Hilfe von hohen Temperaturen desulfatisiert werden müssen, Dreiwegekatalysatoren, Methanoxidationskatalysatoren, Otto-Oxidationskatalysatoren, Otto-Partikelfilter sowie SCR-Katalysatoren. Die Überwachung ist speziell stromab von Partikelfiltern angebrachten Katalysatoren sinnvoll, da hier, insbesondere bei unkontrollierten Regenerationen hohe Temperaturen auftreten können.

Die Katalysatoren und/oder Partikelfilter können in einen Abgasschalldämpfer integriert sein. Sind die Katalysatoren und/oder Partikelfilter nicht zerstörungsfrei vom Schalldämpfer zu lösen, kann das Element zur Temperaturüberwachung an und/oder auf diesem Schalldämpfer aufgebracht sein.

Die Erfindung wird nachfolgend anhand von in der Zeichnung dargestellten Ausführungsbeispielen näher erläutert.

Es zeigen:
- Fig. 1: einen Wabenkörper eines Katalysators mit auf dem Substrat aufgebrachten temperaturempfindlichen Elementen, und
- Fig. 2: einen aus temperaturempfindlichem Material dargestellten Barcode.

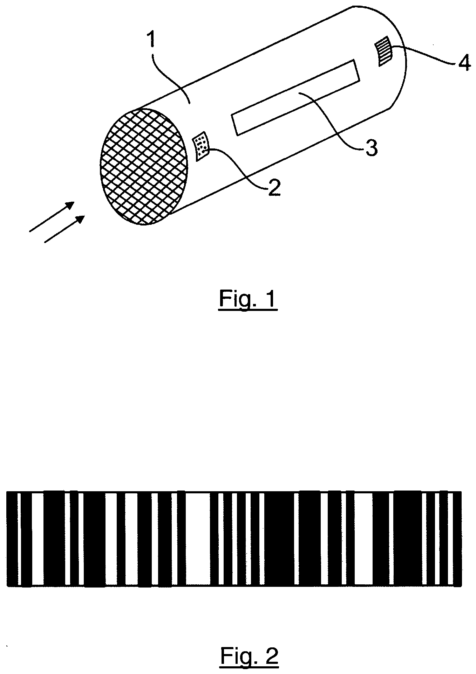

Der in Figur 1 dargestellte Wabenkörper 1 eines Katalysators wird in Pfeilrichtung von dem zu reinigenden Abgas durchströmt, wobei aufgrund ablaufender chemischer Reaktionen hohe Betriebstemperaturen im Wabenkörper 1 auftreten können. Das Grundmaterial des Wabenkörpers 1 besteht aus Keramik und kann auch als Substrat 11 bezeichnet werden, an dessen Umfangsfläche an drei Bereichen temperaturempfindliche Elemente 2, 3, 4 aus unterschiedlichen temperaturempfindlichen Materialien beispielhaft aufgebracht sind. Im mittleren Bereich ist das temperaturempfindliche Element 3 als langgestreckter Streifen auf den Wabenkörper 1 aufgebracht, wodurch eine Temperaturüberwachung über einen größeren Bereich möglich ist. Dieser kann aus Thermofarben, einem Strichcode, ab einer bestimmten Temperatur verdampfenden und/oder ab einer bestimmten Temperatur ihre magnetischen Eigenschaften verändernden Substanz bestehen. Im Eingangsbereich ist ein beispielsweise als 2D-Code aufgebrachtes temperaturempfindliches Element 2 aufgebracht, während im Endbereich das temperaturempfindliche Element 4 einen Barcode darstellt.

Die aufgebrachten temperaturempfindlichen Elemente 2, 3, 4 können für unterschiedliche Grenztemperaturen ihre Materialeigenschaft ändern, das heißt dass auftretende Materialänderungen auf die Überschreitung unterschiedlicher Grenztemperaturen hinweisen.

In Figur 2 ist ein Barcode beispielhaft dargestellt, dessen helle und dunkle Linien von unterschiedlichen temperaturempfindlichen Materialien gebildet werden können und können auch über einen längeren Bereich, beispielsweise über nahezu die gesamte Länge eines Wabengrundkörpers eines Katalysators, angebracht sein. Damit kann dann über die gesamte, mit temperaturempfindlichem Material versehene Fläche eine Temperaturüberwachung durch ein Auslesen der Barcodeinformation sehr einfach erfolgen.

Das temperaturempfindliche Material kann zum Beispiel wenigstens eine der folgenden Verbindungen, insbesondere als Thermofarben, enthalten:
Chromoxid (Cr₂O₃), eine isomorphe Mischung aus Kobaltzinkat (Rinnmanns grün, Co*ZnO),
Chromoxid-Aluminium-Kobaltoxid (CrO₃-Al-CoO),
Kobaltchromid (CoCr₂O₄),
Kobalttitanat (Co₂TiO₄),
Viktoria grün Granat (3CaO, Cr₂O₃, 3SiO₂) bzw. dessen Modifikationen durch Al₂O₃, B₂O₃, CaF₂, CoO oder ZrO₂,
Kobaltaluminat (Tenatsblau, CoO*Al₂O₃),
Kobaltstannat (CoO*SnO₂),
Zirkonvanadin (Zirkonblau, (Zr,V)SiO₄),
Kobaltzinkaluminat ((Co,Zn)Al₂O₄),
Kobaltsilikat (Co₂SiO₄),
Kobaltzinksilikat ((Co,Zn)SiO₄) sowie dessen Modifikation durch B₂O₃,
Strontiumchromat (SrCrO₄),
Chrom-Titangelb (Titanoxid mit Nickeloxid-Antimonoxid- Chromoxid ((Ti,Ni, Sb,Cr)O₂),
Nickel-Barium-Titan-Priderit,
Zinnvanadin ((Sn,V)O₂),
Zirkonpraesodym ((Zr,Pr)SiO₄),
Zirkonvanadin ((Zr,V)O₂),
Nickel-Niob-Titangelb-Rutil ((Ti,Ni,Nb)O₂) und dessen Modifikation durch Cr₂Oθ₃ oder SrO,
Chrom-Niob-Titan-Rutil ((Ti,Cr,Nb)O₂) und dessen Modifikation durch NiO oder SrO,
Chrom-Wolfram-Titan-Rutil,
Zinkchromat (ZnCrO₄),
Aluminiumsilikat mit Eisenoxid,
Eisenoxid (Fe₂O₃),
Eisensilikat (Fe₂O₃*SiO₂),
Chromstannat (Cr₂ (SnO₃)₃),
Zinkeisenoxid (ZnFe₂O₄),
Goldaluminiumkorund (Al₂O₃ und Au) und dessen Modifikation durch Ag₂SiO₄ oder Ton,
Chromaluminiumkorund ((Al,Cr)₂O₃) und dessen Modifikation durch ZnO,
Manganaluminiumkorund ((Al,Mn)₂O₃) und dessen Modifikation durch P₂O₅,
Zirkoneisensilikat ((Zr, Fe)SiO₄),
Chromzinnsphen (CaO, SnO₂, SiO₂, Cr₂O₃) und dessen Modifikation durch B₂O₃ oder PbO,
Chromaluminiumspinell (Zn(Al,Cr)₂O₄) und dessen Modifikation durch B₂O₃, Fe₂O₃, MgO oder PbO,
Chromzinncassiterit ((Sn,Cr)O₃) und dessen Modifikation durch B₂O₃, Ca oder CeO₂,
Kalziumaluminiumsilikat (Ca₃Al₂(SiO₄)₃),
Amide,
Amine und/oder,
natriumausgetausche Zeolithe, insbesondere vom Typ FAU (1.25) - Naₓ-Na₈₅Al₈₅Si₁₀₇O₃₈₄.

## Patentansprüche

1. Abgasnachbehandlungssystem mit einem Katalysator und/oder mit einer anderen Abgasnachbehandlungseinheit für den Einsatz im Abgasstrom von Brennkraftmaschinen, wobei wenigstens ein temperaturempfindliches Element (2 bis 4), welches wenigstens teilweise aus temperaturempfindlichem Material besteht, an wenigstens einem hinsichtlich auftretender Temperaturen zu überwachenden Bereich der Abgasnachbehandlungseinheit vorgesehen ist, und dass das temperaturempfindliche Material bei wenigstens einer vorgegebenen Grenztemperatur seine Eigenschaft dauerhaft sichtbar ändert, **dadurch gekennzeichnet,**
**dass** das temperaturempfindliche Material in Form eines von einer Leseeinrichtung lesbaren Barcodes oder 2D-Codes an der Abgasnachbehandlungseinheit aufgebracht ist, dass der Code sich temperaturabhängig ändert, und
**dass** das temperaturempfindliche Element (2 bis 4) als separates Bauteil ausgeführt ist, das zwischen einem Substrat und einem Mantel eines Katalysators angeordnet ist.

2. Abgasnachbehandlungssystem nach Anspruch 1, **dadurch gekennzeichnet, dass** der Code aus unterschiedlichen temperaturempfindlichen Materialien besteht, die bei unterschiedlichen Grenztemperaturen verdampfen.

3. Abgasnachbehandlungssystem nach einem der vorhergehenden Ansprüche, **dadurch gekennzeichnet, dass** die Farbe des temperaturempfindlichen Materials Seltenerdelemente enthält.

## Claims

1. Exhaust-gas aftertreatment system having a catalytic converter and/or having some other exhaust-gas aftertreatment unit for use in the exhaust-gas stream of internal combustion engines, wherein at least one temperature-sensitive element (2 to 4), which is composed at least partially of temperature-sensitive material, is provided at least one region, which is to be monitored with regard to prevailing temperatures, of the exhaust-gas aftertreatment unit, and in that the temperature-sensitive material permanently visibly changes its property at at least a predefined threshold temperature, **characterized**
**in that** the temperature-sensitive material is applied in the form of a barcode or 2D code, which can be read by a reader device, to the exhaust-gas aftertreatment unit, in that the code changes in a temperature-dependent manner, and
**in that** the temperature-sensitive element (2 to 4) is configured as a separate component which is arranged between a substrate and a shell of a catalytic converter.

2. Exhaust-gas aftertreatment system according to Claim 1, **characterized in that** the code is composed of different temperature-sensitive materials which evaporate at different threshold temperatures.

3. Exhaust-gas aftertreatment system according to any of the preceding claims, **characterized in that** the colour of the temperature-sensitive material comprises rare earth elements.

## Revendications

1. Système de post-traitement des gaz d'échappement comprenant un catalyseur et/ou une autre unité de post-traitement de gaz d'échappement pour l'utilisation dans le courant de gaz d'échappement de moteurs à combustion interne, au moins un élément sensible à la température (2 à 4), qui se compose au moins en partie d'un matériau sensible à la température, étant prévu au niveau d'au moins une région de l'unité de post-traitement de gaz d'échappement dont les températures doivent être surveillées, et en ce que le matériau sensible à la température modifie sa propriété de manière visiblement durable à au moins une température limite prédéfinie, **caractérisé en ce que**
le matériau sensible à la température est appliqué sous la forme d'un code barre lisible par un dispositif de lecture ou sous la forme d'un code en deux dimensions sur l'unité de post-traitement de gaz d'échappement, **en ce que** le code varie en fonction de la température, et **en ce que** l'élément sensible à la température (2 à 4) est réalisé sous forme de composant séparé qui est disposé entre un substrat et une enveloppe d'un catalyseur.

2. Système de post-traitement de gaz d'échappement selon la revendication 1, **caractérisé en ce que** le code se compose de matériaux différents sensibles à la température qui s'évaporent à des températures limites différentes.

3. Système de post-traitement de gaz d'échappement selon l'une quelconque des revendications précédentes, **caractérisé en ce que** la couleur du matériau sensible à la température contient des éléments aux terres rares.
